# EUROPÄISCHE PATENTSCHRIFT

(11) **EP 3 880 590 B1**
(45) Veröffentlichungstag und Bekanntmachung des Hinweises auf die Patenterteilung: **04.01.2023**
(21) Anmeldenummer: 18814786.2
(22) Anmeldetag: 15.11.2018
(51) Int. Cl.: B65G 65/23, B65G 69/18, B08B 15/02

(54) **HOCHEINSCHLUSS-ENTLADESTATION**
HIGH CONTAINMENT DISCHARGE STATION
STATION DE DÉCHARGEMENT À HAUTE INCLUSION

(43) Veröffentlichungstag der Anmeldung: 22.09.2021
(73) Patentinhaber: Fydec Holding SA, 1024 Ecublens (CH)
(72) Erfinder: DIETRICH (JUN.), Frédéric, 1054 Morrens (CH)
(74) Vertreter: Patent- und Rechtsanwälte Behrmann Wagner PartG mbB
(86) Internationale Anmeldenummer: PCT/EP2018/081372
(87) Internationale Veröffentlichungsnummer: WO 2020/098940

(56) Entgegenhaltungen:
- DE-A1-102013 215 667
- DE-U1-202011 051 992
- US-A- 3 744 619
- US-B1- 6 581 778
- Dec-Group: "Powder Handling Excellence Containment . Entleeren", , 27. März 2016 (2016-03-27), XP055607138, Gefunden im Internet: URL:https://www.dec-group.de/fileadmin/01_ Content/Products/Brochures_Copied/Broschur es_DE/DEC_Contained-Bag-Station_de_2.pdf [gefunden am 2019-07-19]
- Frédéric Dietrich: "Bezopachye texholoGii ppoizBodctBa AktiBhyx FapmatseBtiheckix Cybctahtsii", , 31. Mai 2018 (2018-05-31), XP055607177, Gefunden im Internet: URL:https://x-tech.su/news/2018_05_31/Bezo pachye%20texholoGii%20ppoizBodctBa%20AFC.% 20Fpedepik%20Ditpix.pdf [gefunden am 2019-07-19]
- Klaus Meichle: "Pulveraufgabe im Isolator. Containment auf den Prozess zugeschnitten - prozesstechnik online", , 3. November 2016 (2016-11-03), XP055607182, Gefunden im Internet: URL:https://prozesstechnik.industrie.de/ph arma/pulveraufgabe-im-isolator/#slider-int ro-1 [gefunden am 2019-07-19]

## Beschreibung

Die vorliegende Erfindung betrifft eine Entladevorrichtung für gesundheitsgefährdendes und/oder toxisches, loses, insbesondere pulverförmiges, Material aus steifen oder flexiblen Gebinden, insbesondere Säcken und Fässern, umfassend einen Entladungsraum, der eine Abführöffnung zum Abführen des Materials nach einer Entnahme aus einem Gebinde ermöglicht, wobei der Entladungsraum zudem eine Einführöffnung zum zumindest teilweisen Einführen eines Gebindes in den Entladungsraum aufweist.

Des Weiteren betrifft die vorliegende Erfindung ein Verfahren zum Entladen von gesundheitsgefährdendem und/oder toxischem, losem, insbesondere pulverförmigem, Material aus steifen oder flexiblen Gebinden, insbesondere Säcken und Fässern, bevorzugt mit einer erfindungsgemäßen Vorrichtung, wobei das Verfahren zumindest das teilweise Einführen eines Gebindes in einen Entladungsraum über eine Einführöffnung des Entladungsraumes und das Entleeren des Gebindes und das Abführen des Materials über eine Abführöffnung des Entladungsraumes umfasst.

Die Entladung von gesundheitsgefährdenden und/oder toxischen Materialien ist in verschiedenen Bereichen der industriellen Handhabung von Materialien unumgänglich. Dabei sind die Materialien in der Regel vor ihrer Entladung in entsprechenden Gebinden aufgenommen und gesichert, um beispielsweise den gefahrlosen Transport des Materials sicherzustellen. Zur Weiterverarbeitung der entsprechenden Materialien müssen diese jedoch aus den entsprechenden Gebinden entnommen und einem weiteren, bevorzugt abgeschirmten oder abgeriegelten, Weiterverarbeitungsprozess zugeführt werden. Die Betreiber entsprechender Entladungsstationen, also die Benutzer entsprechend gefährlicher Materialien, haben dabei aus Arbeitsschutz und Sicherheitsgründen teilweise individuelle, teilweise aber auch vereinheitlichte Vorgaben erarbeitet, welches Maß an Material im Rahmen der Entladung freigesetzt werden kann, insbesondere also in die Umgebungsluft gelangen darf. Dabei werden in der Regel Grenzwerte festgelegt, die von der jeweiligen Toxizität oder Gefährlichkeit des Materials abhängen. Hierbei wird in der Regel von sogenannten OELs (Occupational Exposure Limits) oder OEBs (Operational Exposure Bands) gesprochen. Diese Grenzwerte setzen fest, wie viel Mikrogramm des entsprechenden Materials pro Kubikmeter

Raumluft in einer Umgebung der Entladestation gemessen oder detektiert werden dürfen. Für Materialien, die einem OEB der Klasse 4 zugeordnet werden, sind beispielsweise 1 bis 10 µg pro Kubikmeter Raumluft des entsprechenden Materials als Grenzwert festgesetzt. Entsprechend gilt für einen Stoff mit einer OEB-Klasse 5, dass nur noch 0,1 bis 1 µg Material pro Kubikmeter Luft aufgefunden werden darf.

Für derartig gefährliche und/oder toxische Stoffe wurden bisher Entladungsstationen und Entladungsverfahren eingesetzt, bei denen eine Entladungsschleuse oder Luftschleuse für die jeweiligen Gebinde vorgesehen war und zum Einsatz kam. Dies bedeutet, dass das jeweilige Gebinde zunächst von außen in eine Schleusenkammer überführt wurde, bevor die Gebinde in einen entsprechenden Entladungsraum der Entladungsstation überführt wurden. Derartige Schleusen- oder Airlock-Systeme haben jedoch eine Vielzahl von Nachteilen. Die Offenbarung "DEC Isocharge" vom 27-03-2016 welche am 19-07-2019 über https://www.dec-group.de/fileadmin/01_Content/ Products/Brochures_Copied/Broschures_DE/DEC_Contained-Bag-Station_de_2.pdf abgerufen wurde offenbart den Oberbegriff der Ansprüche 1 und 6.

Einerseits ist der Zugriff auf die Gebinde in der Schleuse von Seiten des Entladungsraumes unzureichend, sodass unergonomische und damit für den Bediener ungesunde Bewegungen durchgeführt und Belastungen ertragen werden müssen. Außerdem ist die Entladung oder Entleerung mit einer Zwischenlagerung in einer entsprechenden Schleuse zeitaufwendig und limitiert damit in besonderem Maße den Durchsatz an Gebinden oder die entsprechende Menge oder Volumen an zu entladendem Material.

Alternativ sind Systeme und Vorrichtungen bekannt, die mit einem Einweg-Adapter in Form eines Außenliners arbeiten. Dabei wird erst eine Verbindung und Abdichtung des Adapters oder Außenliners mit dem Gebinde, beispielsweise mit dem Fass, hergestellt. Anschließend wird eine dichte Kopplung des Außenliners mit einer Glovebox hergestellt, um dann das Gebinde zu entleeren, beispielsweise um einen Innenliner zu entnehmen. Im Anschluss an die Entleerung muss eine kontaminationsarme oder kontaminationsfreie Entkopplung des Gebindes sichergestellt werden, wozu beispielsweise der Adapter oder Innenliner an zwei Stellen versiegelt und dann in zwei Teilstücke zertrennt wird. Auch dieses System ist sehr aufwendig und benötigt viel Zeit und Ressourcen zum Entladen oder Entleeren der Gebinde.

Da es aber durchaus Anwendungen oder Anwendungsfälle gibt, bei denen für Materialien mit einem Kontaminationsgrenzwert von OEB 4 eine Entladung oder Entleerung von 40 - 45 Gebinden pro Stunde durchgeführt werden soll oder muss, ist die entsprechende Verwendung von bekannten Entladungsstationen sowie die Verwendung bekannter Entladungsverfahren nicht möglich. Ausgehend von dem vorgenannten Stand der Technik liegt der Erfindung die Aufgabe zugrunde, eine verbesserte Entladevorrichtung sowie ein verbessertes Entladeverfahren für gesundheitsgefährdende oder toxische Materialien aus entsprechenden Gebinden anzugeben, bei denen einerseits die strengen Grenzwerte bezüglich der Kontamination der Umgebung für hochgradig toxische Materialien eingehalten werden können, gleichzeitig jedoch eine schnelle und sichere Entladung und Entleerung des Materials oder der Gebinde erreicht wird.

Diese Aufgabe wird hinsichtlich der Entladevorrichtung mit den Merkmalen des Anspruchs 1 gelöst.

Dadurch wird in überraschender Weise erreicht, dass auch ohne das Vorsehen einer entsprechenden Schleuse oder Luftschleuse die Entladung des Materials bzw. die Entleerung der Gebinde erreicht werden kann, ohne dass dadurch eine erhöhte Kontamination der Umgebung verursacht wird. Besonders überraschend hat sich in diesem Zusammenhang sogar herausgestellt, dass es in völliger Abkehr vom Prinzip einer Schleuse sogar möglich ist, die Einführöffnung während des Entleerungs- oder Entladungsvorgangs im Inneren des Entladungsraumes geöffnet zu halten oder geöffnet zu lassen, ohne dass dadurch die Kontamination der Umgebungsluft nachteilig beeinflusst wird. Eine auch während der Entladung oder Entleerung geöffnete Einfuhröffnung hat auch den Vorteil, dass Gebinde mit unterschiedlichen Formen und Geometrien, beispielsweise unterschiedlichen Durchmessern bearbeitet und entleert werden können, da keine Passung oder Dichtung mit der Gebindeoberfläche hergestellt werden muss.

Der erfinderische Grundgedanke sieht also vor, dass im Inneren des Entladungsraums, zumindest während der Entladung oder Entleerung der Gebinde, ein laminarer Luftstrom vorherrscht, der Partikel des zu entladenden Materials von der Einführöffnung weg befördert und somit eine Kontamination der Umgebungsluft weitestgehend oder fast vollständig vermeidet. Dabei ist von besonders vorteilhafter Wirkung, dass die Luftströmung als laminarer Luftstrom erzeugt und aufrechterhalten wird, denn dadurch kann eine Verwirbelung des Luftstroms oder entsprechende Turbulenzen verhindert werden. Diese wiederum könnten potentiell für Rückströmungen im Luftstrom sorgen und damit die Kontamination der Umgebungsluft verursachen oder befördern.

Besonders vorteilhaft gegenüber einer Lösung mit einer Schleuse ist dabei auch, dass die Reinigung der Vorrichtung deutlich vereinfacht und erleichtert wird, da nicht mehr zwei Räume, also Schleusenraum und Entladungsraum, separat gereinigt werden müssen, sondern nur noch der Entladungsraum gereinigt werden muss. Dadurch wird die Rüstzeit oder die Stillstandszeit der Vorrichtung deutlich reduziert.

Gemäß einer ersten vorteilhaften Ausgestaltung der Entladevorrichtung kann es vorgesehen sein, dass der Querschnitt des Entladungsraumes ausgehend von der Einführöffnung in Richtung der Entlüftungsöffnung zumindest abschnittsweise zunimmt. Dadurch wird erreicht, dass der Luftstrom, insbesondere die Geschwindigkeit des laminaren Luftstroms, ausgehend von der Einführöffnung abnimmt oder umgekehrt formuliert mit zunehmender Annäherung an die Einführöffnung zunimmt. Dies hat den besonderen Vorteil, dass, solange die Luftströmung insgesamt im Bereich einer laminaren Strömung verbleibt, gerade im Bereich der Einführöffnung, wo die Wahrscheinlichkeit eines Entweichens eines Partikels des Materials in die Umgebungsluft besonders hoch ist, ein entsprechend starker Luftstrom herrscht und damit die Partikel des Materials effektiv mit der Luftströmung abtransportiert werden. Der Querschnitt des Entladungsraumes kann dabei grundsätzlich unterschiedlich ausfallen. Bevorzugt kann der Querschnitt rechteckig ausgebildet sein. Durch die zumindest abschnittsweise Zunahme des Querschnitts kann eine deutliche Verringerung der Geschwindigkeit der laminaren Luftströmung erreicht werden, was wiederum vorteilhaft bewirkt, dass innerhalb des Entladungsraumes keine Turbulenzen auftreten und Partikel des Materials effektiv mit dem Luftstrom oder der Luftströmung vom Bereich der Einführöffnung weg transportiert werden. Um auch im Bereich der Entlüftungsöffnung keine Kontamination der Umgebungsluft zu bewirken oder zu verursachen, kann entsprechend vorgesehen sein, dass zwischen der Entlüftungsöffnung und den Pumpenmitteln entsprechende Filtereinrichtungen, beispielsweise Doppel-HEPA-Filter sowie zusätzliche Vorfilter, Anwendung finden, um die Materialpartikel im Inneren des Entladungsraumes zu halten.

Gemäß einer weiteren besonders vorteilhaften Ausführungsform kann vorgesehen sein, dass der Einführöffnung ein Verschluss zum reversiblen Öffnen und Schließen der Einführöffnung zugeordnet ist. Dadurch kann insbesondere vor und nach Betrieb der Entladevorrichtung, also immer dann, wenn durch die Pumpenmittel über die Entlüftungsöffnung kein laminarer Luftstrom erzeugt wird, sichergestellt werden, dass nicht im Inneren des Entladungsraumes noch befindliche Materialpartikel in die Umgebung und die Umgebungsluft geraten. Wie oben bereits angedeutet, kann sogar besonders vorteilhaft vorgesehen sein, dass der entsprechende Verschluss während des tatsächlichen Entladens oder Entleerens der Gebinde geöffnet bleibt, auch um sicherzustellen, dass der laminare Luftstrom zwischen Einführöffnung und Entlüftungsöffnung aufrechterhalten bleibt und insbesondere kein Unterdruck im Entladungsraum entsteht. Es kann aber auch vorgesehen sein, dass der Verschluss während des Entladens oder Entleerens geschlossen wird und damit die Einführöffnung verschließt, wobei dann entsprechende Mittel vorzusehen sind, um weiterhin während des Entladens oder Entleerens einen laminaren Luftstrom ausgehend von der Einführöffnung in Richtung der Entlüftungsöffnung zu bewirken. Auf eine entsprechende Ausgestaltungsform wird weiter unten noch eingegangen werden. Der Verschluss kann beispielsweise als verschiebbarer oder verschwenkbarer Verschluss ausgebildet sein.

Erfindungsgemäß ist vorgesehen, dass im Inneren des Entladungsraumes zwischen der Einführöffnung und der Abführöffnung eine, bevorzugt vertikale, Trennwand mit einer variablen Durchtrittsöffnung angeordnet ist. Diese Ausführungsform hat den zusätzlichen Vorteil, dass Verwirbelungen der laminaren Luftströmung und insbesondere Rückströmungen in Richtung der Einführöffnung verhindert oder minimiert werden. Die bevorzugt vertikale Trennwand kann als variable Durchtrittsöffnung beispielsweise eine vertikal angeschlagene Klapptür, beispielsweise mit einer beidseitig angeschlagenen Doppeltür, aufweisen, wobei die Öffnung derart ausgestaltet und dimensioniert ist, dass die zu entleerenden Gebinde, soweit diese vollständig in dem Entladungsraum aufgenommen werden, durch die Durchtrittsöffnung hindurch treten können. Dabei ist die Durchtrittsöffnung auch derart ausgestaltet, dass in keinem Zustand während der Entleerung eine luftdichte Versiegelung oder Abschließung durch die Trennwand erzielt wird, da auch bei einer nicht vollständig geöffneten Durchtrittsöffnung sichergestellt bleiben muss, dass die laminare Luftströmung vonseiten der Einführöffnung die Trennwand in Richtung der Entlüftungsöffnung passieren kann, um die laminare Luftströmung aufrechtzuerhalten.

Eine weitere besonders bevorzugte Ausgestaltung der Entladevorrichtung sieht vor, dass im Bereich der Einführöffnung eine Dichtungsvorrichtung zur dichtenden Anlage von Gebindeoberflächen, insbesondere Fässern, angeordnet ist. Dies kann vorteilhaft sein, um sicherzustellen, dass nur äußerst wenig Material in die Umgebungsluft der Entladevorrichtung gelangt. Die entsprechende Dichtungsvorrichtung kann beispielsweise als aufblasbare Ringdichtung ausgeführt sein und kann bevorzugt bei Gebinden, insbesondere Fässern, zum Einsatz kommen, die im Rahmen der Entleerung nicht vollständig, sondern nur zum Teil, insbesondere nur mit einem oberen Rand, von der Entladevorrichtung, insbesondere in die Entladevorrichtung, aufgenommen werden.

In diesem Fall wird durch die Dichtungsvorrichtung zudem eine weitere Sicherung des Gebindes an der Entladevorrichtung bewerkstelligt, sodass ein sicheres Entladen oder Entleeren ermöglicht wird.

Erfindungsgemäß ist vorgesehen, dass im Bereich der Einführöffnung eine Düsenanordnung angeordnet ist, die derart mit Pumpenmitteln verbunden ist, dass eine Luftströmung in Richtung der Entlüftungsöffnung erzeugt werden kann. Wie oben bereits beschrieben, ist es grundsätzlich und in äußerst überraschender Art und Weise mit der erfindungsgemäßen Vorrichtung möglich, die Einführöffnung des Entladungsraumes auch während des Entladungs- oder Entleerungsvorgangs der Gebinde geöffnet zu lassen, ohne dass dadurch eine Kontamination der Umgebungsluft erfolgt.

Dies bringt aber gleichzeitig die Gefahr mit sich, dass das zu entladende oder zu entleerende Material selbst durch Partikel aus der Umgebungsluft kontaminiert oder verunreinigt wird, was insbesondere im Bereich der chemischen oder pharmazeutischen Industrie zu erheblichen Problemen führen kann. Demnach kann insbesondere über das Vorsehen einer entsprechenden Düsenanordnung erreicht werden, dass während der Entladung oder Entleerung die Einführöffnung einerseits geschlossen oder abgedichtet wird, andererseits jedoch die laminare Luftströmung zwischen Einführöffnung und Entlüftungsöffnung aufrechterhalten wird, indem über die Düsenanordnung und die verbundenen Pumpenmittel entsprechende Luft in den Entladungsraum, insbesondere im Bereich der Einführöffnung, gelangt. Dabei kann besonders vorteilhaft vorgesehen sein, dass die über die Düsenanordnung zugeführte Luft im Vorfeld einer Reinigung oder Filtrierung unterzogen wurde, um keine Verunreinigung des zu entladenden Materials zu bewirken. Diese Ausführungsform ist auch dann besonders vorteilhaft, wenn die Entladung oder Entleerung in einer Stickstoffatmosphäre stattfinden soll, beispielsweise, weil die entladenen Materialien entsprechend gefährlich, beispielsweise explosiv, oder anfällig für Feuchtigkeit, insbesondere Luftfeuchtigkeit sind. Denn dann kann sichergestellt werden, dass eine laminare Stickstoffströmung erzeugt wird, die die Kontamination der Umgebung verhindert.

Weiterhin kann vorteilhaft vorgesehen sein, dass die Pumpenmittel der Düsenanordnung einen weitestgehend identischen Volumenstrom an Luft der Entladevorrichtung, insbesondere dem Entladungsraum, zuführen, wie auf der anderen Seite über die Entlüftungsöffnung und die dortigen Pumpenmittel dem Entladungsraum der Entladevorrichtung entnommen wird. Dadurch werden die Druckverhältnisse im Inneren des Entladungsraums konstant gehalten. Gemäß einer besonders bevorzugten Ausgestaltungsform kann auch vorgesehen sein, dass die auf Seiten der Entlüftungsöffnung entnommene Luft in einem geschlossenen Kreislauf und ggf. unter Identität der entsprechenden Pumpenmittel über die Einführöffnung dem Entladungsraum wieder zugeführt wird.

Gemäß einer ebenfalls bevorzugten Ausgestaltung der Entladevorrichtung kann zudem vorgesehen sein, dass im Inneren des Entladungsraumes ein Gebindebeförderungs- oder Transportmittel angeordnet ist. Dieses kann beispielsweise als Pulley-System oder als Förderband ausgestaltet sein und kann dazu dienen, das Gebinde oder innere Lagen des Gebindes zu transportieren.

Hinsichtlich des Verfahrens zum Entladen von gesundheitsgefährdendem, toxischem, losem, insbesondere pulverförmigem, Material wird die oben formulierte Aufgabe durch ein gattungsgemäßes Verfahren mit den Merkmalen des Anspruchs 6 gelöst.

Dadurch wird mit dem erfindungsgemäßen Verfahren erreicht, dass ein besonders hohes Maß an Verunreinigungs- oder Kontaminationsschutz (High Containment) erreicht wird, insbesondere ohne die Nachteile einer entsprechenden Luftschleuse oder Schleuse für die Gebinde in Kauf nehmen zu müssen. Mit anderen Worten ausgedrückt bedeutet dies, dass mit dem erfindungsgemäßen Verfahren die Entleerung oder das Entladen von Gebinden mit toxischem oder gesundheitsgefährdendem Material mit einem hohen Durchsatz und insbesondere in ergonomisch vorteilhafter Weise ermöglicht wird.

Gemäß einer ersten Verfahrensvariante kann vorteilhaft vorgesehen sein, dass durch die Entlüftungsöffnung in Zusammenwirkung mit den Pumpenmitteln erzeugte Luftströmung im Bereich der Einführöffnung eine Geschwindigkeit von 0,5 bis 1,0 m/s, bevorzugt 0,6 bis 0,8 m/s, erzeugt wird. Damit liegt die Geschwindigkeit des laminaren Luftstroms deutlich über der eines sonstigen Isolators oder eines Reinraums. Eine entsprechende Luftströmung sorgt effektiv dafür, dass Partikel des Materials von der Einführöffnung weg in Richtung der Entlüftungsöffnung kraftbeaufschlagt und entsprechend abtransportiert werden.

Gemäß einer weiteren vorteilhaften Verfahrensführung kann zudem vorgesehen sein, dass der Querschnitt des Entladungsraumes ausgehend von der Einführöffnung in Richtung der Entlüftungsöffnung zumindest abschnittsweise zunimmt, sodass die Geschwindigkeit der Luftströmung im Bereich der Abführöffnung auf etwa ein Drittel bis ein Sechstel der Geschwindigkeit im Bereich der Einführöffnung, insbesondere auf 0,1 bis 0,3 m/s abgesenkt wird. Damit wird in besonders vorteilhafter Weise realisiert, dass keine Turbulenzen oder Verwirbelungen der Luftströmung entstehen, die potentiell eine Rückströmung und damit eine Austragung von Partikeln aus der Entladevorrichtung, insbesondere dem Entladungsraum, bewirken.

Ebenfalls kann in einer weiteren vorteilhaften Ausgestaltung des Verfahrens vorgesehen sein, dass durch die Entlüftungsöffnung ein Volumenstrom von 200 bis 800 Kubikmetern pro Stunde entnommen wird. Dabei richtet sich dieser Durchsatz selbstverständlich nur auf die Zeiten oder Betriebszeiten, in denen die entsprechenden Pumpenmittel aktiviert und eine laminare Luftströmung im Inneren des Entladungsraumes erzeugt wird. Der Durchsatz oder das entnommene Volumen ist proportinal zur Größe oder Fläche der Einführöffnung und kann auch von den oben genannten Werten abweichen.

Erfindungsgemäß ist vorgesehen, dass Gebinde vor der Entleerung im Inneren des Entladungsraumes zwischen Einführöffnung und Abführöffnung eine, bevorzugt vertikale, Trennwand mit einer variablen Durchtrittsöffnung passieren. Dadurch wird ebenfalls erreicht, dass Rückströmungen oder Turbulenzen verhindert werden. Weiterhin kann mit einer entsprechenden Trennwand sichergestellt werden, dass selbst im Fall einer Turbulenz oder Rückströmung die entsprechenden Partikel die Trennwand nicht passieren, sondern zurückgehalten werden.

Weiter kann in einer besonders bevorzugten Ausgestaltung des Verfahrens vorgesehen sein, dass mit einem Verschluss zum reversiblen Öffnen und Schließen der Einführöffnung die Einführöffnung zumindest zum teilweisen Einführen eines Gebindes geöffnet wird und bevorzugt während der Entleerung des Gebindes geöffnet bleibt. Wie oben bezüglich der Vorrichtung bereits beschrieben, kann jedoch auch vorgesehen sein, dass die entsprechende Einführöffnung mit dem Verschluss nach dem zumindest teilweisen Einführen eines Gebindes verschlossen oder teilverschlossen wird. In diesem Fall ist dann sicherzustellen, dass im Bereich der Einführöffnung eine Luftzufuhr sichergestellt wird, sodass die laminare Luftströmung im Inneren des Entladungsraumes aufrechterhalten werden kann.

Ebenfalls kann gemäß einer bevorzugten Ausgestaltung des Verfahrens vorgesehen sein, dass im Bereich der Einführöffnung eine Dichtungsvorrichtung angeordnet ist, die vor der Entleerung eines Gebindes zur dichtenden Anlage mit einer Gebindeoberfläche, insbesondere einer Fassoberfläche, gebracht wird. Dadurch kann sichergestellt werden, dass keine oder nur eine definierte Öffnung der Einführöffnung verbleibt, wenn das entsprechende Gebinde, insbesondere das entsprechende Fass, an der Einführöffnung angeordnet und abgedichtet ist.

Erfindungsgemäß ist vorgesehen, dass im Bereich der Einführöffnung eine Düsenanordnung angeordnet ist, die mit Pumpenmitteln verbunden ist, sodass durch die Düsenanordnung eine Luftströmung in Richtung der Entlüftungsöffnung erzeugt wird. Dadurch kann, insbesondere bei geschlossener Einführöffnung, während der Entleerung oder Entladung sichergestellt werden, dass der laminare Luftstrom im Inneren des Entladungsraumes aufrechterhalten wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in
- Fig. 1: eine schematische Darstellung einer Entladevorrichtung welche nicht Teil der Erfindung ist gemäß einem ersten Beispiel

- Fig. 2: eine schematisierte Darstellung einer Entladevorrichtung welche nicht Teil der Erfindung ist gemäß einem zweiten Beispiel;
- Fig. 3: eine schematisierte Darstellung einer nach dem Konzept der Erfindung ausgebildeten Entladevorrichtung zur Durchführung des erfindungsgemäßen Verfahrens.

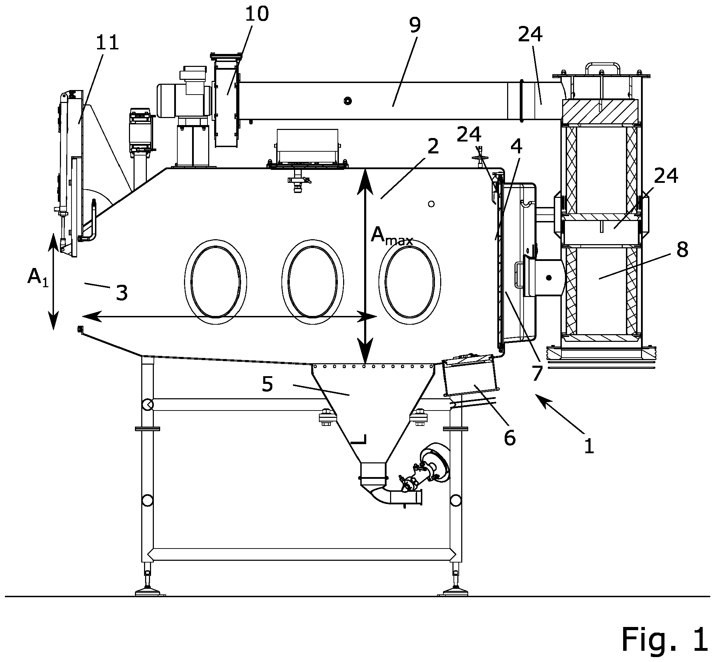

Fig. 1 zeigt eine Entladevorrichtung 1 mit einem Entladungsraum 2, der auf einer Seite in eine Einführöffnung 3 mündet und der auf der gegenüberliegenden Seite eine Entlüftungsöffnung 4 aufweist. Die Einführöffnung 3 kann beispielsweise eine Fläche A₁ von 0,1 m² bis 0,4 m² ,bevorzugt 0,2 m² bis 0,3m^{2,} aufweisen. Die Entlüftungsöffnung 4 kann bevorzugt eine Fläche von 0,4 m² bis 0,8 m² aufweisen, wobei für Entladevrrichtungen 1 die mit Fässern als Gebinden arbeiten ein Fläche von 0,6 m² bis 0,8 m² bevorzugt wird, wohingegen bei Entladevorrichtungen 1 die mit Säcken als Gebinden arbeiten eine Fläche von 0,4 m² bis 0,6 m² bevorzugt wird.

Weiter umfasst der Entladungsraum 2 der Entladevorrichtung 1 eine Abführöffnung 5, mit der das zu entladende oder zu entleerende Material abgeführt werden kann. Im Bereich der Abführöffnung 5 kann beispielsweise eine mechanische Zerkleinerungsvorrichtung angeordnet sein, um verklumptes Material zu zerkleinern. Die Zerkleinerungsvorrichtung kann als ein in der Fig. 1 nicht dargestellter Knollenbrecher ausgestaltet sein. Bevorzugt wird zwischen dem Zentrum der Einführöffnung 3 und dem Zentrum der Abführöffnung 5 eine Transportlänge L der Entladevorrichtung definiert. Weiter bevorzugt werden eine besonders gute laminare Strömung und eine besonders geringe Kontamination der Umgenbung erreicht, wenn das Verhältnis der Fläche A₁ der Einführöffnung 3 zur Transportlänge L kleiner als 0,3 m ist, bevorzugt zwischen 0,08m und 0,22m, insbesondere zwischen 0,10m und 0,20m, liegt.

Dabei kann bevorzugt die Transportlänge L möglichst groß gewählt werden, da die im Bereich der Abführöffnung 5 stattfindende Behandlung der Gebinde potentiell Turbulenzen in der Luftströmung verursachen kann.

Auch ist eine Ausschleusungsöffnung 6 vom Entladungsraum 2 der Entladevorrichtung 1 umfasst, über die beispielsweise entleerte Gebinde, also Säcke oder Innen-Liner von Fässern, nach einer entsprechenden Versiegelung aus der Entladevorrichtung 1 ausgeschleust werden können. An die Entlüftungsöffnung 4 schließt sich im Beispiel der Fig. 1 ein Vorfilter 7 sowie ein doppelter HEPA-Filter 8 an, wobei die Entlüftungsöffnung 4 über die Filter 7, 8 und eine Rohrleitung 9 mit den Pumpenmitteln 10 verbunden sind. Mit den Pumpenmitteln 10 kann Luft angesaugt werden, sodass im Inneren des Entladungsraums 2 eine laminare Luftströmung entsteht, die ausgehend von der Einführöffnung 3 in Richtung der Entlüftungsöffnung 4 gerichtet ist.

Bevorzugt sind dabei die Pumpenmittel 10 mit Steuermitteln verbunden, die dazu eingerichtet sind, den Luftstrom zu verändern oder zu regulieren. Mit den Steuermitteln kann sichergestellt werden, dass der Abtransport von Partikeln in Abhängigkeit des zu entladenden Materials, beispielsweise in Abhängigkeit von Partikelvolumen, Partikeldichte und/oder Partikelgewicht, optimal erfolgt und insbesondere ein entsprechend optimaler Luftstrom erzeugt wird. Die Steuermittel können so ausgestaltet sein, dass eine Vorgabe oder Einstellung des Luftstroms durch einen Benutzer erfolgt. Alternativ könnte auch eine automatische Erkennung des Materials und eine automatische Ansteuerung der Pumpenmittel 10 durch die Steuermittel vorgesehen sein. Insgesamt kann vorgesehen sein, dass bei einem Material mit einer geringen Dichte oder mit leichten Partikeln der Luftstrom reduziert wird.

Der Vorfilter 7 kann beispielsweise als Tuch ausgebildet sein, welches an einer Wandfläche des Entladungsraums 2 anliegt, und welches in einen nicht dargestellten Rahmen geklemmt oder sonst an dem Rahmen befestigt ist. Der Vorfilter 7 lässt sich bevorzugt innerhalb des Entladungsraumes 2 wechseln, insbesondere indem der Rahmen abgenommen und das Tuch entnommen wird. Der benutzte und ggf. verstopfte oder zugesetzte Vorfilter 7 kann durch die Ausschleusungsöffnung 6 sicher entsorgt werden.

Um abhängig von den Zuständen der Filter 7, 8 und den Leistungen der Pumpenmittel 10 eine laminare Luftströmung zu erreichen und aufrecht zu erhalten, kann zudem vorgesehen sein, dass die Entladevorrichtung 1 einen oder mehrere Drucksensormittel 24 umfasst, welche jeweils den Luftdruck an bestimmten Stellen der Entladevorrcihtung 1 bestimmen. Im Beispiel der Fig. 1 kann vorgesehen sein, dass im Bereich des Vorfilters 7 und der Filter 8 drei Drucksensormittel 24 vorgesehen sind, die den jeweiligen Druck oder Luftdruck messen. Mit entsprechenden, nicht dargestellten Auswertemitteln kann daraus beispielsweise auch die Druckdifferenz über den jeweiligen Filter 7, 8 bestimmt werden. Diese Druckdifferenzen können wiederum dazu dienen den Zustand der Filter und die Notwendigkeit eines Filterwechsels zu bestimmen.

Der Querschnitt des Entladungsraumes 2 nimmt, ausgehend von der Einführöffnung 3, in Richtung der Entlüftungsöffnung 4 oder in Richtung der Abführöffnung 5 abschnittsweise zu. Beispielsweise weist der Querschnitt des Entladungsraumes 2 im Bereich der Einführöffnung 3 einen ersten Querschnitt A₁ auf, der sich dann bis zu einem maximalen Querschnitt Aₘₐₓ im Bereich der Abführöffnung 5 vergrößert. Dadurch wird erreicht, dass im Bereich der Einführöffnung 3 eine laminare Luftströmung mit einer größeren Strömungsgeschwindigkeit erzeugt wird als beispielsweise im Bereich der Abführöffnung 5 oder der Entlüftungsöffnung 4.

Über die Einführöffnung 3 können beispielsweise Säcke mit toxischem oder gesundheitsgefährdendem Material in das Innere des Entladungsraumes eingeführt werden. Dazu kann der Verschluss 11 der Einführöffnung geöffnet werden. Sobald oder bereits bevor sich ein entsprechendes Gebilde im Inneren des Entladungsraumes befindet, können, beispielsweise gleichzeitig mit der Öffnung des Verschlusses 11, die Pumpenmittel 10 aktiviert werden und ein laminarer Luftstrom ausgehend von der Einführöffnung 3 in Richtung der Entlüftungsöffnung 4 erzeugt werden. Wenn dann das Gebinde, beispielsweise der Sack, im Inneren des Entladungsraumes geöffnet und entleert wird, sorgt der laminare Luftstrom innerhalb des Entladungsraumes 2 dafür, dass keine Partikel des Materials nach außen gelangen, selbst wenn der Verschluss 11 während dem Entleeren oder Entladen des Gebindes zeitweise oder vollständig geöffnet bleibt. Damit kann ein besonders hoher Durchsatz von Gebinden und damit auch an Material erreicht werden und gleichzeitig ein besonders hohes Maß an Kontaminationsschutz gewährleistet werden.

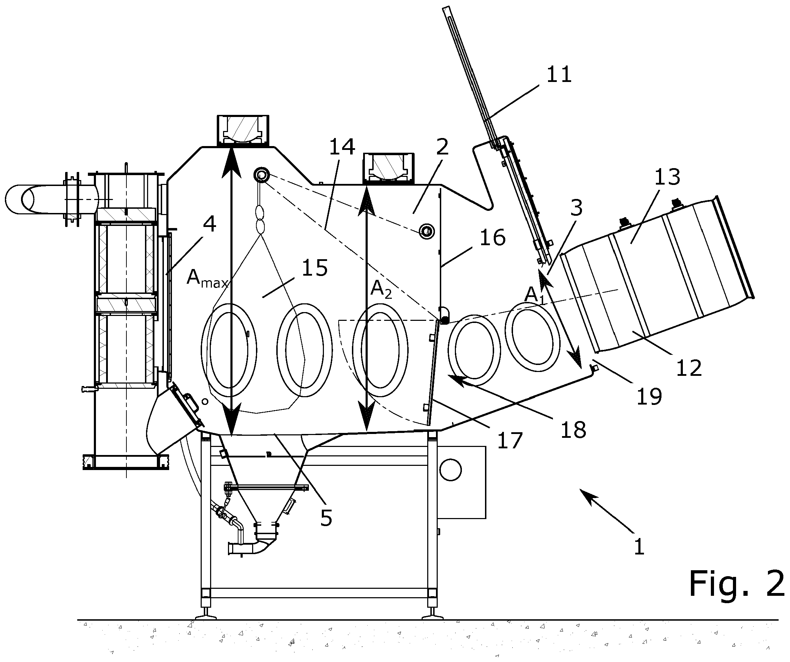

Die Fig. 2 zeigt ein abgewandeltes Beispiel einer Entladevorrichtung 1, bei der mit einer nicht dargestellten Hebevorrichtung ein Gebinde 12 in Form eines Fasses 13 an die Einführöffnung 3 des Entladungsraumes 2 gehoben und ggf. gekippt wird. Im Verfahrensstadium, wie es in der Fig. 2 dargestellt ist, ist der Verschluss 11 der Einführöffnung 3 bereits geöffnet, das Gebinde 12 bereits angehoben, gekippt und geöffnet und mittels eines Gebindebeförderungsoder -transportmittels, welches im Beispiel der Fig. 2 in Form eines Pulley-Systems 14 dargestellt ist, ein Innengebinde des Fasses 13 entnommen wurde. Dabei hat das Innengebinde oder der Liner 15 des Gebindes 12 mit dem Pulley-System 14 eine vertikale Trennwand 16 passiert, die eine einseitig angeschlagene Klapptür 17 als variable Durchtrittsöffnung 18 aufweist. Die Durchtrittsöffnung 18 erstreckt sich dabei bevorzugt über 30% bis 50% der Höhe der Trennwand 16. Dementsprechend ist in dem Verfahrensstadium, wie in der Fig. 2 dargestellt, ebenfalls bereits über die in der Fig. 2 nicht dargestellten Pumpenmitteln ein laminarer Luftstrom zwischen der Einführöffnung 3 und der Entlüftungsöffnung 4 erzeugt worden, der im Weiteren auch aufrechterhalten wird und aufrechterhalten werden kann, da gewollt zwischen dem Gebinde 12 und der Einführöffnung 3 ein Luftspalt 19 beibehalten oder realisiert wird, um das Nachströmen von Luft in das Innere des Entladungsraumes zu ermöglichen.

Der Querschnitt der Entladevorrichtung 1 weist neben einem ersten Querschnitt A1 im Bereich der Eintrittsöffnung und einem zweiten größeren Querschnitt A2 im Bereich der Trennwand 16 einen maximalen Querschnitt Amax im Bereich der Abführöffnung 5 auf. Der vergrößerte Querschnitt A2 dient hauptsächlich zur Herstellung und Beibehaltung einer laminaren Luftströmung. Der größte Querschnitt Amax dient neben der Aufrechterhaltung der laminaren Luftströmung auch noch zu einem weiteren Zweck. Denn mit dem maximalen Querschnitt wird auch eine maximale Höhe des Entladungsraumes 2 erreicht. Dadurch kann das Pulley-System 14 so ausgebildet und angeordent werden, dass das zu entleerende oder zu entladende Gebinde vollständig vom Pulley-System 14 in der Luft gehalten wird und zwar in einer Position möglichst genau oberhalb der Abführöffnung 5. Somit kann ohne ein Schütteln des Gebindes und damit einhergehenden Verwirbelungen das Gebinde, hier der Liner 15, geöffnet, beispielsweise aufgeschnitten, und entleert werden. Zusätzlich kann das Gebinde nach dem Öffnen oder Aufschneiden durch das Pulley-System 14 auf die Abführöffnung 5 abgesenkt oder abgelassen werden, sodass ein ebenfalls möglichst staubfreier Entleervorgang ermöglicht wird.

Zusammen mit dem Pulley-System 14 kann eine Handhabungshilfe, beispielsweise eine Einwegschnur zum Einsatz kommen, die die sichere Ankopplung des Gebindes oder Liners 15 an das Pulley-System 14, zum Beispiel einen Haken des Pulley-Systems 14 sicherstellt. Diese Handhabungshilfe wird bevorzugt zunächst an dem Gebinde oder Liner 15 befestigt, insbesondere angeknotet, und dann mit dem Pulley-System 14 verbunden. Die Handhabungshilfe kann dabei so dimensioniert und ausgeführt sein, dass sie eine sichere Handhabung des Gebindes, insbesondere ein sicheres Anheben des Gebindes ermöglicht, wie beispielsweise in Fig. 2 anhand der Position des Liners 15 angedeutet.

Der mit dem Pulley-System 14 entnommene Liner 15 des Gebindes 12 kann entsprechend geöffnet, beispielsweise aufgeschnitten, und entleert werden, ohne dass dabei die Gefahr besteht, dass eine Kontamination der Umwelt herbeigeführt wird, die den entsprechenden OEB- oder OEL-Grenzwert überschreitet.

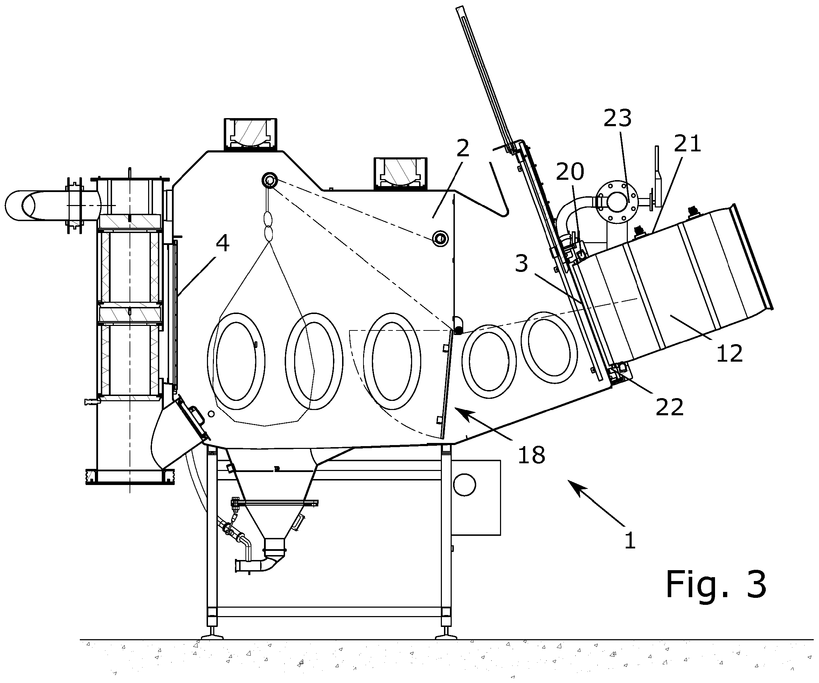

In der Fig. 3 ist ein Verfahrenszustand gezeigt, der im Wesentlichen dem Verfahrenszustand der Fig. 2 entspricht, wobei die Entladevorrichtung 1 sich von der Entladevorrichtung 1 der Fig. 2 dadurch unterscheidet, dass zwischen dem Gebinde 12 und der Einführöffnung 3 nunmehr kein Luftspalt 19 besteht. Stattdessen ist eine Dichtungsvorrichtung 20 vorgesehen, an der die Gebindeoberfläche 21 dichtend zur Anlage kommt. Das kann beispielsweise dadurch erreicht werden, dass die Dichtungsvorrichtung 20 als mit einem Druck beaufschlagbaren expansionsfähigen Dichtungsring mit entsprechenden Druckmitteln ausgestaltet ist, sodass nach einer entsprechenden Anordnung des Gebindes 12 ein Druck auf den Dichtungsring erzeugt oder ausgeübt werden kann, sodass dieser sich dichtend an die Gebindeoberfläche 21 anpresst.

Um im Ausführungsbeispiel der Fig. 3 zu gewährleisten, dass die laminare Luftströmung zwischen Einführöffnung 3 und Entlüftungsöffnung 4 aufrechterhalten wird oder aufrechterhalten werden kann, umfasst die Entladevorrichtung 1 eine im Bereich der Einführöffnung 3 angeordnete Düsenanordnung 22, die ihrerseits wiederum mit Pumpenmitteln 23 zusammenwirkt und erlaubt, eine Luftströmung in Richtung der Entlüftungsöffnung 4 zu generieren. Damit ist zwar im Ausführungsbeispiel der Fig. 3 im Rahmen der Entleerung oder Entladung des Gebindes 12 die Einführöffnung 3 verschlossen und sogar abgedichtet, es kann jedoch trotzdem der laminare Luftstrom aufrechterhalten bleiben, der sicherstellt, dass eventuell noch im Bereich der Einführöffnung 3 befindliche oder angeordnete Partikel des Materials von der Einführöffnung 3 weg befördert werden. Außerdem kann sichergestellt werden, dass im Rahmen der Entleerung oder Entladung des Gebindes 12 keine oder nur unwesentliche Umgebungsluft in die Entladevorrichtung 1, insbesondere in den Entladungsraum 2, eindringt, die potentiell geeignet ist, um das Material zu verunreinigen oder zu kontaminieren.

### Bezugszeichenliste

- 1: Entladevorrichtung
- 2: Entladungsraum
- 3: Einführöffnung
- 4: Entlüftungsöffnung
- 5: Abführöffnung
- 6: Ausschleusungsöffnung
- 7: Vorfilter
- 8: doppelter HEPA-Filter
- 9: Rohrleitung
- 10: Pumpenmittel
- 11: Verschluss
- 12: Gebinde
- 13: Fass
- 14: Pulley-System
- 15: Liner
- 16: vertikale Trennwand
- 17: Klapptür
- 18: Durchtrittsöffnung
- 19: Luftspalt
- 20: Dichtungsvorrichtung
- 21: Gebindeoberfläche
- 22: Düsenanordnung
- 23: Pumpenmittel
- 24: Drucksensormittel

- A₁: erster Querschnitt
- A₂: zweiter Querschnitt
- Aₘₐₓ: maximaler Querschnitt

## Patentansprüche

1. Entladevorrichtung für gesundheitsgefährdendes, loses, insbesondere pulverförmiges, Material aus steifen oder flexiblen Gebinden (12), insbesondere Säcken und Fässern (13), umfassend ein Entladungsraum (2), der eine Abführöffnung (5) zur Abführung des Material nach einer Entnahme aus einem Gebinde (12) ermöglicht, der zudem eine Einführöffnung (3) zum zumindest teilweisen Einführen eines Gebindes (12 in den Entladungsraum (2) aufweist, wobei der Entladungsraum (2) eine Entlüftungsöffnung (4) aufweist, die an einer der Einführöffnung (3) gegenüberliegenden Seite des Entladungsraums (2) angeordnet ist und die derart mit Pumpenmitteln (10) verbunden ist, dass innerhalb des Entladungsraums (2) eine Luftströmung erzeugt werden kann, die einen laminaren Luftstrom ausgehend von der Einführöffnung (3) in Richtung der Entlüftungsöffnung (4) bewirkt,
**dadurch gekennzeichnet,**
**dass** im Inneren des Entladungsraums (2) zwischen Einführöffnung (3) und Entladungsraum (2) eine, bevorzugt vertikale, Trennwand (16) mit einer variablen Durchtrittsöffnung (18) angeordnet ist, wobei die variable Durchtrittsöffnung (18) so ausgestaltet und dimensioniert ist, dass die zu entleerenden Gebinde (12), soweit diese vollständig in dem Entladungsraum (2) aufgenommen werden, durch die Durchtrittsöffnung (18) hindurch treten können und ferner so ausgestaltet ist, dass in keinem Zustand während der Entleerung eine luftdichte Versiegelung oder Abschließung durch die Trennwand (16) erzielt wird, und wobei im Bereich der Einführöffnung (3) eine Düsenanordnung (22) angeordnet ist, die derart mit Pumpenmitteln (10) verbunden ist, dass eine Luftströmung in Richtung der Entlüftungsöffnung (4) erzeugt werden kann.

2. Entladevorrichtung nach Anspruch 1,
**dadurch gekennzeichnet,**
**dass** der Querschnitt des Entladungsraums (2) ausgehend von der Einführöffnung (3) in Richtung der Entlüftungsöffnung (4) zumindest abschnittsweise zunimmt.

3. Entladevorrichtung nach Anspruch 2,
**dadurch gekennzeichnet,**
**dass** der Einführöffnung (3) ein Verschluss (11) zum reversiblen Öffnen und Schließen der Einführöffnung (3) zugeordnet ist.

4. Entladevorrichtung nach einem der Ansprüche 1 bis 3,
**dadurch gekennzeichnet,**
**dass** im Bereich der Einführöffnung (3) eine Dichtungsvorrichtung (20) zur dichtenden Anlage von Gebindeoberflächen (21), insbesondere Fässern (13), angeordnet ist.

5. Entladevorrichtung nach einem der Ansprüche 1 bis 4,
**dadurch gekennzeichnet,**
**dass** im Inneren des Entladungsraums (2) ein Gebinde- Beförderungs- oder Transportmittel angeordnet ist.

6. Verfahren zum Entladen von gesundheitsgefährdendem losen, insbesondere pulverförmigen, Material aus steifen oder flexiblen Gebinden (12), insbesondere Säcken und Fässern (13), bevorzugt mit einer Vorrichtung nach einem der Ansprüche 1 bis 7, umfassend das zumindest teilweise Einführen des Gebindes (12) in einen Entladungsraum (2) über eine Einführöffnung (3) des Entladungsraum (2) und Entleeren des Gebindes (12) und das Abführen des Materials über eine Abführöffnung (5) des Entladungsraumes (2), wobei zumindest während des Entleerens des Gebindes (12) durch eine Entlüftungsöffnung (4), die an einer der Einführöffnung (3) gegenüberliegenden Seite des Entladungsraums (2) angeordnet ist, und zugeordnete Pumpenmittel (10) eine Luftströmung erzeugt wird, die einen laminaren Luftstrom ausgehend von der Einführöffnung (3) in Richtung der Entlüftungsöffnung (4) bewirkt,
**dadurch gekennzeichnet,**
**dass** das Gebinde (12) vor der Entleerung im Inneren des Entladungsraums (2) zwischen Einführöffnung (3) und Entladungsraum eine, bevorzugt vertikale, Trennwand (16) mit einer variablen Durchtrittsöffnung (18) passiert, wobei die Durchtrittsöffnung (16) so ausgestaltet und dimensioniert ist, dass die zu entleerenden Gebinde (12), soweit diese vollständig in dem Entladungsraum (2) aufgenommen werden, durch die Durchtrittsöffnung (18) hindurch treten können und wobei die variable Durchtrittsöffnung (18) so ausgestaltet ist, dass in keinem Zustand während der Entleerung eine luftdichte Versiegelung oder Abschließung durch die Trennwand (16) erzielt wird und wobei im Bereich der Einführöffnung (3) eine Düsenanordnung (22) angeordnet ist, die mit Pumpenmitteln (10) verbunden ist, so dass durch die Düsenanordnung (22) eine Luftströmung in Richtung der Entlüftungsöffnung (4) erzeugt wird.

7. Verfahren nach Anspruch 6,
**dadurch gekennzeichnet, dass** im Bereich der Einführöffnung (3) eine Luftströmung von 0,6 bis 0,8 m/s erzeugt wird.

8. Verfahren nach Anspruch 6 oder 7,
**dadurch gekennzeichnet,**
**dass** der Querschnitt des Entladungsraums (2) ausgehend von der Einführöffnung (3) in Richtung der Entlüftungsöffnung (4) zumindest abschnittsweise zunimmt so dass die Geschwindigkeit der Luftströmung im Bereich der Abführöffnung auf etwa 1/3 bis 1/6 der Geschwindigkeit im Bereich der Einführöffnung (3), insbesondere auf 0,1 bis 0,3 m/s, abgesenkt wird.

9. Verfahren nach einem der Ansprüche 6 bis 8,
**dadurch gekennzeichnet,**
**dass** durch die Entlüftungsöffnung (4) ein Volumenstrom entnommen wird, der proportional zur Größe oder Fläche der Eintrittsöffnung (3) ist, bevorzugt ein Volumenstrom von 200 -800 m³/h..

10. Verfahren nach einem der Ansprüche 6 bis 9,
**dadurch gekennzeichnet,**
**dass** mit einem Verschluss (11) zum reversiblen Öffnen und Schließen der Einführöffnung (3) die Einführöffnung (3) zum zumindest teilweisen Einführen des Gebindes geöffnet wird und bevorzugt während der Entleerung des Gebindes geöffnet bleibt.

11. Verfahren nach einem der Ansprüche 6 bis 10,
**dadurch gekennzeichnet,**
**dass** im Bereich der Einführöffnung (3) eine Dichtungsvorrichtung (20) angeordnet ist, die vor der Entleerung eines Gebindes zur dichtenden Anlage mit einer Gebindeoberfläche (21), insbesondere einer Fassoberfläche, gebracht wird.

## Claims

1. An unloading device for unloading loose, in particular powdery, material hazardous to health from rigid or flexible containers (12), in particular bags and drums (13),
the unloading device comprising an unloading chamber (2) comprising a discharge opening (5) for discharging the material after removal from a container (12) and further comprising an insertion opening (3) for at least partial insertion of a container (12) into the unloading chamber (2),
wherein the unloading chamber (2) has a ventilation opening (4) which is disposed on a side of the unloading chamber (2) opposite the insertion opening (3) and which is connected to pump means (10) in such a manner that an airflow can be generated inside the unloading chamber (2), the airflow causing a laminar airflow from the insertion opening (3) in the direction of the ventilation opening (4),
**characterized in that**
a, preferably vertical, partition wall (16) having a variable passage opening (18) is disposed between the insertion opening (3) and the unloading chamber (2) inside the unloading chamber (2), wherein the variable passage opening (18) is designed and dimensioned in such a manner that the containers (12) to be emptied, insofar as they are completely received in the unloading chamber (2), can pass through the passage opening (18) and is also designed in such a manner that no airtight sealing or closure is achieved by the partition wall (16) in any state during the emptying, and wherein a nozzle arrangement (22) is disposed in the area of the insertion opening (3), the nozzle arrangement (22) being connected to pump means (10) in such a manner that an airflow in the direction of the ventilation opening (4) can be generated.

2. The unloading device according to claim 1,
**characterized in that**
the cross section of at least part of the unloading chamber (2) increases from the insertion opening (3) in the direction of the ventilation opening (4).

3. The unloading device according to claim 2,
**characterized in that**
a closure device (11) for the reversible opening and closing of the insertion opening (3) is assigned to the insertion opening (3).

4. The unloading device according to any one of claims 1 to 3,
**characterized in that**
a seal device (20) for the sealing contact with container surfaces (21), in particular drums (13), is disposed in the area of the insertion opening (3).

5. The unloading device according to any one of claims 1 to 4,
**characterized in that**
a container conveyor or transport means is disposed inside the unloading chamber (2).

6. A method for unloading loose, in particular powdery, material hazardous to health from rigid or flexible containers (12), in particular bags and drums (13), preferably by means of a device according to any one of claims 1 to 7, the method comprising the at least partial insertion of the container (12) into an unloading chamber (2) via an insertion opening (3) of the unloading chamber (2) and the emptying of the container (12) and the discharge of the material via a discharge opening (5) of the unloading chamber (2),
wherein, at least during the emptying of the container (12), an airflow is generated by a ventilation opening (4) which is disposed on a side of the unloading chamber (2) opposite the insertion opening (3) and by pump means (10) assigned thereto, the airflow causing a laminar airflow from the insertion opening (3) in the direction of the ventilation opening (4),
**characterized in that**
before the container (12) is emptied, the container (12) passes through a, preferably vertical, partition wall (16) having a variable passage opening (18) between the insertion opening (3) and the unloading chamber (2) inside the unloading chamber (2), wherein the passage opening (18) is designed and dimensioned in such a manner that the containers (12) to be emptied, insofar as they are completely received in the unloading chamber (2), can pass through the passage opening (18) and wherein the variable passage opening (18) is designed in such a manner that no airtight sealing or closure is achieved by the partition wall (16) in any state during the emptying and wherein a nozzle arrangement (22) is disposed in the area of the insertion opening(3), the nozzle arrangement (22) being connected to pump means (10) in such a manner that an airflow in the direction of the ventilation opening (4) is generated.

7. The method according to claim 6,
**characterized in that**
an airflow of 0.6 m/s to 0.8 m/s is generated in the area of the insertion opening (3).

8. The method according to claim 6 or 7,
**characterized in that**
at least part of the cross section of the unloading chamber (2) increases from the insertion opening (3) in the direction of the ventilation opening (4), the speed of the airflow in the area of the discharge opening thus being reduced to approximately 1/3 to 1/6 of the speed in the area of the insertion opening (3), in particular to 0.1 m/s to 0.3 m/s.

9. The method according to any one of claims 6 to 8,
**characterized in that**
a volume flow is extracted through the ventilation opening (4), the volume flow being proportional to the size or surface of the insertion opening (3), preferably a volume flow of 200 m³/h to 800 m³/h.

10. The method according to any one of claims 6 to 9,
**characterized in that**
the insertion opening (3) is opened by means of a closure device (11) for the reversible opening and closing of the insertion opening (3) in order to at least partially insert the container and preferably remains open during the emptying of the container.

11. The method according to any one of claims 6 to 10,
**characterized in that**
a seal device (20) is disposed in the area of the insertion opening (3), the seal device (20) coming into sealing contact with a container surface (21), in particular a drum surface, before a container is emptied.

## Revendications

1. Dispositif de déchargement pour du matériau dangereux pour la santé et en vrac, notamment en poudre, d'emballages (12) rigides ou flexibles, notamment de sacs ou de fûts (13),
ledit dispositif de déchargement comprenant une chambre de déchargement (2) qui a une ouverture d'évacuation (5) pour évacuer le matériau après l'avoir retiré d'un emballage (12) et qui a une ouverture d'introduction (3) pour introduire au moins partiellement un emballage (12) dans la chambre de déchargement (2), la chambre de déchargement (2) ayant une ouverture de ventilation (4) qui est disposée à un côté de la chambre de déchargement (2) opposé à l'ouverture d'introduction (3) et qui est reliée à des moyens de pompe (10) de manière qu'un écoulement d'air est généré dans la chambre de déchargement (2), ledit écoulement d'air produisant un courant d'air laminaire à partir de l'ouverture d'introduction (3) dans la direction de l'ouverture de ventilation (4),
**caractérisé en ce**
**qu'**une paroi de séparation (16), de préférence verticale, ayant une ouverture de passage (18) variable est disposée à l'intérieur de la chambre de déchargement (2) entre l'ouverture d'introduction (3) et la chambre de déchargement (2), l'ouverture de passage (18) variable étant conçue et dimensionnée de manière que les emballages (12) à vider, dans la mesure où ceux-ci sont reçus complètement dans la chambre de déchargement (2), sont capables de passer à travers l'ouverture de passage (18) et étant conçue, de plus, de manière qu'aucune étanchéité ou fermeture hermétiques ne soit obtenue dans un état quelconque par la paroi de séparation (16) pendant le vidange, et un ensemble de tuyères (22) étant disposé dans la zone de l'ouverture d'introduction (3), ledit ensemble de tuyères (22) étant relié aux moyens de pompe (10) de manière qu'un écoulement d'air est capable d'être généré dans la direction de l'ouverture de ventilation (4).

2. Dispositif de déchargement selon la revendication 1,
**caractérisé en ce que**
la section transversale de la chambre de déchargement (2) augmente au moins par sections à partir de l'ouverture d'introduction (3) dans la direction de l'ouverture de ventilation (4).

3. Dispositif de déchargement selon la revendication 2,
**caractérisé en ce**
**qu'**une fermeture (11) pour l'ouverture et la fermeture réversibles de l'ouverture d'introduction (3) est attribuée à l'ouverture d'introduction (3).

4. Dispositif de déchargement selon l'une quelconque des revendications 1 à 3,
**caractérisé en ce**
**qu'**un dispositif d'étanchéité (20) pour le contact étanche de surfaces d'emballages (21), notamment de fûts (13), est disposé dans la zone de l'ouverture d'introduction (3).

5. Dispositif de déchargement selon l'une quelconque des revendications 1 à 4,
**caractérisé en ce**
**qu'**un moyen de transport d'emballages ou un moyen convoyeur d'emballages est disposé à l'intérieur de la chambre de déchargement (2).

6. Procédé pour le déchargement de matériau dangereux pour la santé et en vrac, notamment en poudre, d'emballages (12) rigides ou flexibles, notamment de sacs ou de fûts (13), de préférence, au moyen d'un dispositif selon l'une quelconque des revendications 1 à 7,
ledit procédé comprenant l'introduction au moins partielle de l'emballage (12) dans une chambre de déchargement (2) via une ouverture d'introduction (3) de la chambre de déchargement (2) et le vidange de l'emballage (12) et l'évacuation du matériau via une ouverture d'évacuation (5) de la chambre de déchargement (2), un écoulement d'air étant généré au moins pendant le vidange de l'emballage (12) par une ouverture de ventilation (4) qui est disposée à un côté de la chambre de déchargement (2) opposé à l'ouverture d'introduction (3) et par des moyens de pompe (10) attribués, ledit écoulement d'air produisant un courant d'air laminaire à partir de l'ouverture d'introduction (3) dans la direction de l'ouverture de ventilation (4),
**caractérisé en ce**
**qu'**avant le vidange à l'intérieur de la chambre de déchargement (2) entre l'ouverture d'introduction (3) et la chambre de déchargement (2), l'emballage (12) passe à travers une paroi de séparation (16), de préférence verticale, ayant une ouverture de passage (18) variable, l'ouverture de passage (18) étant conçue et dimensionnée de manière que les emballages (12) à vider, dans la mesure où ceux-ci sont reçus complètement dans la chambre de déchargement (2), sont capables de passer à travers l'ouverture de passage (18) et l'ouverture de passage (18) variable étant conçue de manière qu'aucune étanchéité ou fermeture hermétiques ne soit obtenue dans un état quelconque par la paroi de séparation (16) pendant le vidange et un ensemble de tuyères (22) étant disposé dans la zone de l'ouverture d'introduction (3), ledit ensemble de tuyères (22) étant relié à des moyens de pompe (10) de manière qu'un écoulement d'air est généré dans la direction de l'ouverture de ventilation (4) par l'ensemble de tuyères (22).

7. Procédé selon la revendication 6,
**caractérisé en ce**
**qu'**un écoulement d'air de 0,6 à 0,8 m/s est généré dans la zone de l'ouverture d'introduction (3).

8. Procédé selon la revendication 6 ou 7,
**caractérisé en ce que**
la section transversale de la chambre de déchargement (2) augmente au moins par sections à partir de l'ouverture d'introduction (3) dans la direction de l'ouverture de ventilation (4) de manière que la vitesse de l'écoulement d'air est réduite à environ 1/3 à 1/6 de la vitesse dans la zone de l'ouverture d'introduction (3), notamment à 0,1 à 0,3 m/s.

9. Procédé selon l'une quelconque des revendications 6 à 8, **caractérisé en ce**
**qu'**un débit volumétrique est extrait à travers l'ouverture de ventilation, le débit volumétrique étant proportionnel à la taille ou la surface de l'ouverture d'introduction (3), de préférence un débit volumétrique de 200 à 800 m³/h.

10. Procédé selon l'une quelconque des revendications 6 à 9, **caractérisé en ce que**
l'ouverture d'introduction (3) est ouverte au moyen d'une fermeture (11) pour l'ouverture et la fermeture réversibles de l'ouverture d'introduction (3) pour l'introduction au moins partielle de l'emballage et, de préférence, reste ouverte pendant le vidange de l'emballage.

11. Procédé selon l'une quelconque des revendications 6 à 10, **caractérisé en ce**
**qu'**un dispositif d'étanchéité (20) est disposé dans la zone de l'ouverture d'introduction (3), ledit dispositif d'étanchéité (20) venant en contact étanche avec une surface d'emballages (21), notamment une surface de fût, avant le vidange d'un emballage.
